Europäisches Patentamt

European Patent Office

Office européen des brevets

(11) Publication number: **0 323 734**
**A1**

## (12) EUROPEAN PATENT APPLICATION

(21) Application number: 88312160.0

(51) Int. Cl.⁴: **F16L 53/00 , F16L 11/12**

(22) Date of filing: 21.12.88

(30) Priority: 31.12.87 GB 8730349

(43) Date of publication of application:
12.07.89 Bulletin 89/28

(84) Designated Contracting States:
AT BE CH DE ES FR GB GR IT LI LU NL SE

(71) Applicant: STANDARD HOSE LIMITED
Owler Ings Mill Owler Ings Road
Brighouse West Yorkshire HD6 1EJ(GB)

(72) Inventor: Anderson, Roderick Seaton
Birk House Farm Bailiffe Bridge
Brighouse West Yorkshire HD6 4JL(GB)

(74) Representative: Wharton, Peter Robert et al
Urquhart-Dykes & Lord Alliance House 29-31
Kirkgate
Bradford West Yorkshire, BD1 1QB(GB)

(54) Hosepipe.

(57) A helically convoluted flexible hose (10) which comprises a helically convoluted tube or liner (12) having wound in the roots of the external or internal convolutions thereof a heating member (22). The latter is preferably a small bore pipe (22) capable of receiving steam or other heating medium. The pipe (22) replaces the conventional wire reinforcement in the convolutions, producing a hose which is no bulkier than conventional but which has built-in heating means.

EP 0 323 734 A1

## HOSEPIPE

This invention relates to hosepipes, in particular to flexible convoluted hosepipes.

Convoluted, flexible, plastics material hosepipes such as those described in our UK patent number 1543586 are increasingly being employed where it is necessary to transfer fluid through a flexible line, for example when loading or unloading fluid from tankers. Such hoses combine lightness in weight with flexibility and high resistance to kinking, crushing, and vacuum.

Such hoses are often reinforced, e.g. by winding a wire in the roots of the external convolutions. Furthermore the helical hose configuration, whether wire reinforced or not, can be further shielded and strengthened with an external braid or rubber cover.

For certain end uses it is desirable that the hoses should be heated. This is currently done by spirally wrapping a heating member around the outside of the hose, on top of the braid or rubber cover, and applying heat either electrically generated or from steam through the member to the hose. Such hoses have the disadvantage that the heating member is not in intimate contact with the helically convoluted fluid carrying portion and the hose is made more bulky (larger in diameter) than the original product.

The invention seeks to provide a helically convoluted hose capable of being heated which does not suffer from the above disadvantages.

According to the present invention there is provided a helically convoluted flexible hose which comprises a helically convoluted tube having wound in the roots of the external or internal convolutions thereof a heating member.

The heating member, in effect, replaces the "wire" reinforcement and therefore lies in intimate contact with the helically convoluted tube, under any braid or rubber cover. The heating member may be wound in the internal or external convolutions although for most end uses it is preferred to wind the member in the external convolutions. The convolutions not containing the heating member may contain a conventional wire reinforcement, although the preferred construction merely has the heating member wound in the external convolutions with the internal convolutions being empty.

The heating member may itself comprise a tube or pipe, obviously of small diameter in relation to the diameter of a hosepipe. Alternatively, the heating member may comprise or contain an electrical resistance heating element. It is preferred that the heating member comprises a small bore pipe through which steam or the like heating medium can be passed.

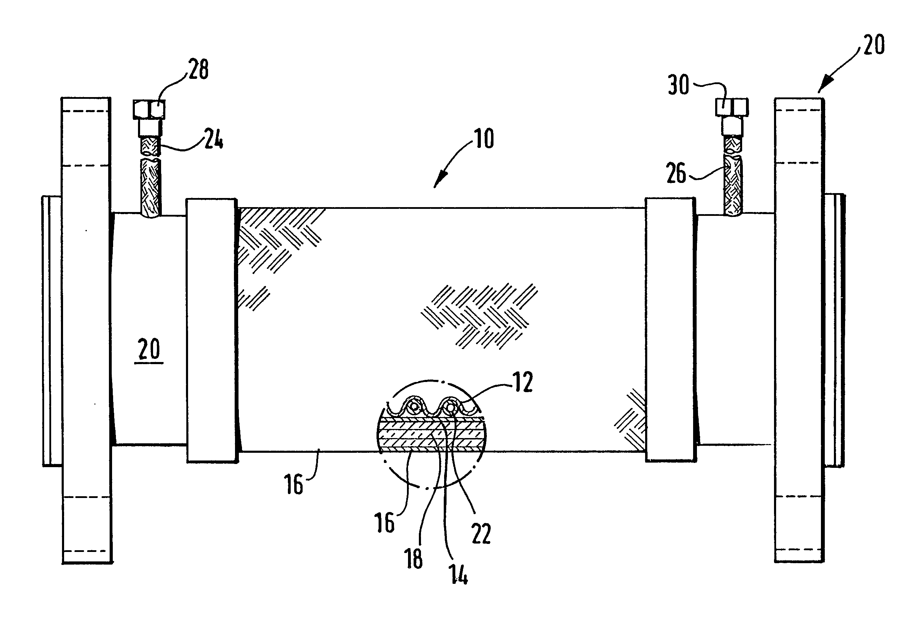

The invention will be described further, by way of example, with reference to the accompanying drawing, in which the sole figure is a diagrammatic elevational view, partly in section, of a hose constructed in accordance with the invention.

Referring to the drawing, it can be seen that a hose generally designated 10 comprises an internal helically convoluted tube or liner 12 of plastics material such as polytetrafluoroethylene (PTFE). In the present case the liner 12 is then covered with an inner wire braid 14 and an outer wire braid 16 between which is thermal insulation 18 for example of woven glass cloth.

The hose is provided with end fittings 20 in the conventional manner.

Within the roots of the external convolutions of the liner 12 is wound a heating member in the form of a small bore pipe 22. The pipe 22 may also be made of PTFE and is preferably of smooth bore. The pipe 22 may itself be covered with a stainless steel wire braid. The free ends of 24, 26 of the latter are brought out of suitable orifices in the end fittings 20, e.g. a hole in each spigot just behind the flange of the end fitting, and are themselves provided with end fittings 28, 30.

In use, the hose 10 is connected in line by means of the end fittings 20 in a manner known per se. The free ends 24, 26 of the heating pipe 22 are connected by means of the end fittings 28, 30 to a steam line whereby steam can be passed through the pipe 22. By this means the heat is transferred beneath the thermally insulating jacket 18 directly through the liner 12 to the contents of the hosepipe 10.

In the example illustrated the liner 12 may have a bore of 1 to 6 inches diameter. The hose 22 may be a smooth bore PTFE hose of internal bore size 4.5 mm rated for a maximum working pressure of 300psi. This hose is very flexible and may itself be thermally insulated by silicone rubber sleeve after it has exited the main hosepipe at each end if required. The heating medium may be any fluid or gas but will usually be steam. With the materials discussed above the maximum temperature for the heating medium is normally 180°C. The thermal insultion layer 18 is designed to minimise external heat loss.

The hose of the invention provides a simple and effective solution where flexible hosepipes are required in conditions where the contents of the pipe must be heated.

## Claims

1. A helically convoluted flexible hose which comprises a helically convoluted tube having wound in the roots of the external or internal convolutions thereof a heating member.

2. A hose as claimed in claim 1 in which the heating member lies in intimate contact with the helically convoluted tube, under any braid or rubber cover.

3. A hose as claimed in either of claims 1 or 2 in which the heating member is wound in the internal or external convolutions

4. A hose as claimed in claim 3 in which the member is wound in the external convolutions.

5. A hose as claimed in any of claims 1 to 4 in which convolutions not containing the heating member contain a conventional wire reinforcement.

6. A hose as claimed in any of claims 1 to 4 in which convolutions not containing the heating member are empty.

7. A hose as claimed in any of claims 1 to 6 in which the heating member itself comprises a tube or pipe of small diameter in relation to the diameter of a hosepipe.

8. A hose as claimed in claim 7 in which the heating member comprises a small bore pipe through which steam or the like heating medium can be passed.

9. A hose as claimed in either of claims 7 or 8 in whch the pipe is made of PTFE.

10. A hose as claimed in claim 9 in which the pipe is smooth bore and covered with steel braid.

11. A hose as clasimed in any of claims 7 to 10 in which the hose has a bore of 1 to 6 inches diameter and the pipe has an internal bore size of about 4.5 mm.

12. A hose as claime in any of claims 7 to 11 in which the pipe is provided with a silicone rubber sleeve after it has exited the main hosepipe at each end to provide thermal insulation thereto.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 429 597 (INDEPENDENT SHOE MACH.) * page 1, right column, line 23 - page 2, left column, line 19; claims; figure * | 1-4 | F 16 L 53/00 F 16 L 11/12 |
| A | | 12 | |
| X | GB-A- 744 435 (PIRELLI-GENERAL CABLE WORKS et al..) * claims 1,5,7; figures 1,3 * | 1-4 | |
| A | | 12 | |
| X | EP-A-0 097 901 (SIEMENS AG) * page 3, line 5 - page 4, line 11; figure 1 * | 1-3 | |
| A | | 5,6 | |
| A | DE-U-1 956 480 (PADERWERK GEBR. BENTELER) * claim 1; figure 1 * | 7-9,11 | |
| A | DE-A-2 804 652 (DAYCO CORP.) * claim 1; figure 2 * | 1-3 | TECHNICAL FIELDS SEARCHED (Int. Cl.4) F 16 L 53/00 F 16 L 11/00 |

The present search report has been drawn up for all claims

| Place of search | Date of completion of the search | Examiner |
|---|---|---|
| BERLIN | 30-03-1989 | SCHAEFFLER C.A.A. |

EPO FORM 1503 03.82 (P0401)